# EUROPEAN PATENT APPLICATION

(11) **EP 0 576 678 A1**
(43) Date of publication of application: **05.01.1994**
(21) Application number: 92923570.3
(22) Date of filing: 17.11.1992
(51) Int. Cl.: G05B 19/403, G05B 19/18

(54) **METHOD OF EXPANDING FUNCTION OF AUTOMATIC PROGRAMMING APPARATUS**

(30) Priority: 25.11.1991 JP 335733/91
(71) Applicant: FANUC LTD., Minamitsuru-gun, Yamanashi 401-05 (JP)
(72) Inventor: SEKI, Masaki, Tokyo 168 (JP); TAKEGAHARA, Takeshi 256-2, Nishiterakata-machi, Tokyo 192-01 (JP); ITOU, Kouichi Fanuc Dai-3 Vira-karamatsu, Yamanashi 401-05 (JP)
(74) Representative: Billington, Lawrence Emlyn
(86) International application number: JP9201501
(87) International publication number: WO9311476

(57) **Abstract**

A method of expanding the function of an automatic programming apparatus capable of making various kinds of technical calculations easily without being restricted by an intrinsic automatic programming language. A compiler for a high level language is provided in the control software for a ROM to enable the programming based on a general-purpose high level language suitable for technical calculations to be carried out, prepare a program, which is required by a user for attaining a specific object, by using a high level language, and store this object (b1') in a RAM. When NC data are prepared by executing the objects (a1', a2') prepared using an automatic programming language, the technical calculations, which are impossible by instructions based on the automatic programming language, are performed by the object (b1'), and the automatic programming function based on the objects (a1', a2') is executed by using the results of this computation. If libraries (*c, d*) in an automatic programming apparatus can be utilized when a program of a high level language required to attain a specific object is prepared, a part of the program is prepared by utilizing the automatic programming function including the libraries (*c, d*).

## Description

### Technical Field

The present invention relates to a function expanding method for an automatic programming apparatus.

### Background Art

Conventionally known are automatic programming apparatuses which create NC programs with use of various automatic programming languages such as APT, AUTOSPOT, etc.

However, these automatic programming languages are composed mainly of definition statements for assigning dots, lines, circles, etc., cutting statements for assigning the path of a tool, operation sequence, etc., and control statements for modifying the sequence of execution of the cutting statements, etc., and also, their functions are limited to ones for effecting only cutting operation. In the fields of technical computations and the like, therefore, the functions of the processors cannot be fully utilized. In some processors, however, programs are stored after being customized through a user's processing operation so that the custom programs can be invoked and executed as required. Since instruction units themselves of the individual statements cannot be divided, delicate technical computations and the like cannot be made either.

### Disclosure of the Invention

The present invention provides a function expanding method for an automatic programming apparatus, in which various technical computations can be made without being restricted by programming languages proper to the automatic programming apparatus, and also the results of these computations can be utilized directly for automatic programming operation, or programs for the technical computations and the like can easily be created with use of functions previously reserved in the automatic programming apparatus.

According to the present invention, a compilation function for compiling a general-purpose high-level language is given to the automatic programming apparatus, and programs created in the high-level language can be invoked and processed during the execution of programs created in an automatic programming language. Thus, various technical computations can be made without being restricted by programming languages proper to the automatic programming apparatus, and moreover, the results of these computations can be utilized directly for the automatic programming operation.

In this case, the automatic programming apparatus is stored beforehand with a program of the high-level language together with an identification code attached thereto, and a call code is previously set in a program of the automatic programming language. Thus, when this call code is read, the program of the high-level language corresponding thereto is invoked, and arithmetic processing, such as technical computation, can be executed.

Further, by invoking and executing an automatic programming function of the automatic programming apparatus during the execution of the program of the high-level language, arithmetic processing associated with a graphic form or the like can be effected by means of a function previously reserved in the automatic programming apparatus.

In this case, the automatic programming apparatus is stored beforehand with the program of the automatic programming language with an identification code attached thereto, and a call code is previously set in the program of the high-level language. Thus, when this call code is read, the automatic programming function corresponding thereto is invoked, and the arithmetic processing associated with the graphic form or the like can be executed.

Furthermore, a plurality of programs written in the high-level language and automatic programming language may previously be stored so that an operator can selectively execute desired programs by invoking the programs through operation Of a final controlling element such as a keyboard.

### Brief Description of the Drawings

Fig. 1 is a block diagram showing the principal part of an automatic programming apparatus for carrying out a method according to the present invention;
Fig. 2 is a flow chart shoving an outline of an NC data conversion processing;
Fig. 3 is a flow chart showing an outline of an interruption processing;
Fig. 4 is a conceptual diagram showing a compilation processing executed by a compiler; and
Fig. 5 is a functional block diagram showing correlations between processings executed according to control programs for the automatic programming apparatus.

### Best Mode of Carrying Out the Invention

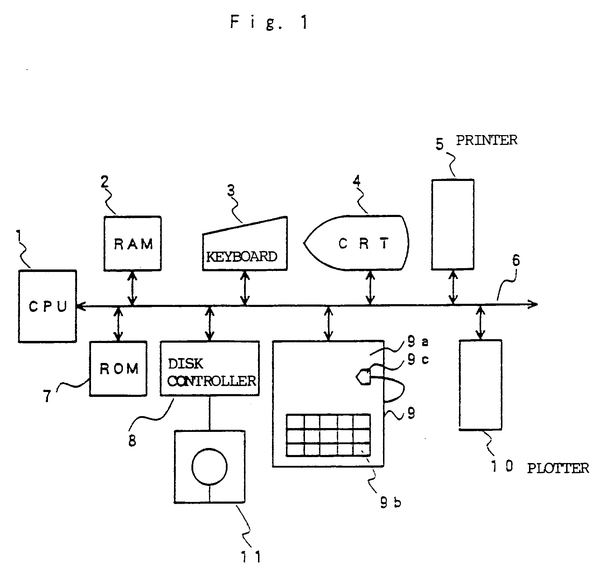

Referring to Fig. 1, an outline of an automatic programming apparatus for carrying out the present invention will be described. A ROM 7 stores control programs for the automatic programming apparatus, while a RAM 2 stores system programs loaded from a floppy disk 11, various data, etc. Numeral 3 denotes a keyboard; 4, a CRT for use as a display unit; 9, a tablet unit; 8, a disk controller; 11, the floppy disk loaded with the system programs and the like; 10, an X-Y plotter for outputting plotted drawings; and 5, a printer. These elements are connected to a CPU 1 by means of a bus 6.

The tablet unit 9, which includes a picture-responsive region 9a and a menu table 9b, is designed so that an operator can assign an optional position on a display screen of the CRT 4 by moving a tablet cursor 9c within the picture-responsive region 9a and also by moving a graphic cursor on the CRT 4 for indicative operation, and select various menu items, including creation of new working programs, from the system programs reserved in the floppy disk 11 by moving the tablet cursor 9c on the menu table 9b for indicative operation.

General functions and normal programming operation of automatic programming apparatuses of this type are generally known. The automatic programming apparatus of the present embodiment, however, differs from a conventional one in that the ROM 7 is loaded with an automatic programming language compiler for compiling source programs, given by a dedicated automatic programming language, into execute-form objects, and a high-level language compiler for compiling source programs, given by a general-purpose high-level language, into execute-form objects.

In the present embodiment, FAPT is used as the automatic programming language, and C-language as the general-purpose high-level language. Alternatively, however, FORTRAN, BASIC, or some other optional high-level language may be selected as the general-purpose high-level language. In this case, the ROM 7 is previously loaded with a compiler for such a language.

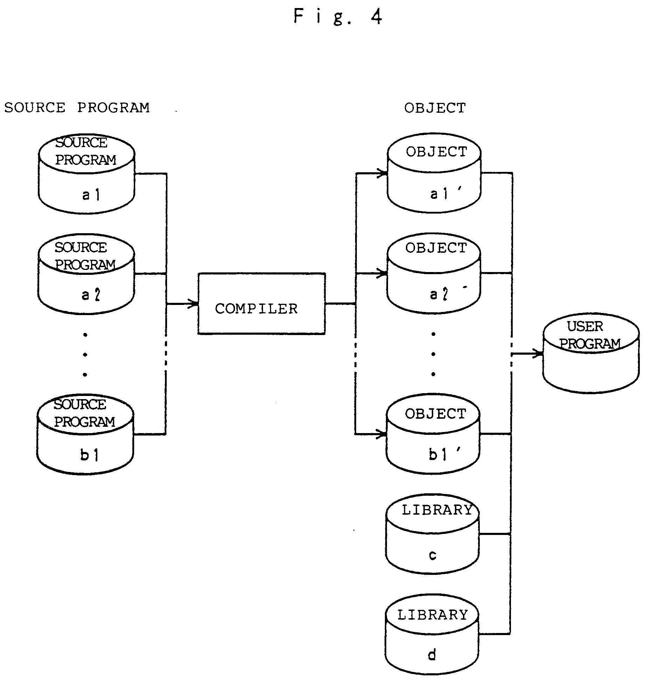

If NC programs can be created only by inputting data, obtainable from design drawings, according to the grammar of the automatic programming language, source programs a1, a2, ^{. . .}, which serve as the NC programs, are created in the automatic programming language in the same manner as in the conventional case, and identification codes, such as program numbers, are attached to these programs to encode the same. Thereafter, the automatic programming apparatus is caused to read the programs by operating the keyboard 3. The source programs a1, a2, ^{. . .} for the NC programs read by the automatic programming apparatus, as shown in Fig. 4, are compiled into execute-form objects a1', a2', ^{. . .} by means of the automatic programming language compiler, and are loaded into the RAM 2 or the floppy disk 11.

In creating the automatic programming language such as NC programs for work configuration which require too complicated arithmetic processing beyond the function of the FAPT, or in executing part of design operation at the stage of programming, the operator previously creates, using a general-purpose C-language, a technical computation source program b1 and the like for computing data, which are allowed to be inputted according to the grammar of the FAPT, with reference to the design drawings, and identification codes, indicative of the program numbers, are attached to these programs to encode the same. Thereafter, the automatic programming apparatus is caused in advance to read the programs by operating the keyboard 3.

Since the high-level languages, such as the C-language, FORTRAN, BASIC, etc., have a language system suited for general technical computations, they can be used to execute various arithmetic processing operations which cannot be performed with use of the FAPT or other automatic programming languages. Source programs created in the general-purpose high-level language, such as the C-language, are not limited to the ones used to execute complicated arithmetic processing beyond the function of the automatic programming language, or the ones used to compute data which are allowed to be inputted according to the grammar of the automatic programming language, and may alternatively be created and stored freely according to the operator's judgment.

As shown in Fig. 4, the source program b1 and the like of the high-level language read by the automatic programming apparatus are compiled into an execute-form object b1' and the like by means of the high-level language compiler, and are loaded into the RAM 2 or the floppy disk 11.

If arithmetic processing too complicated for the aforesaid automatic programming language alone to manage is required in the stage of creating the source programs a1, a2, ^{. . .} for the NC programs with use of the automatic programming language, user call codes for assigning the program numbers, such as the object b1' obtained from the previously created high-level language, that is, the program numbers, such as the technical computation source program and the like for computing the data, which are allowed to be inputted according to the grammar of the FAPT, with reference to the design drawings, are set, and alternative source programs are newly created and converted into execute-form objects with use of the high-level language, and user call codes for assigning the program numbers for these objects are set thereafter. By doing this, processings for the complicated arithmetic processing operations can be executed with use of the previously created technical computation source program b1' and the like and the newly created object based on the high-level language.

Further, in the case where it is faster to execute part of the arithmetic processing in the technical computation source program b1 and the like with use of library objects c, d, ^{. . .} previously reserved in the automatic programming apparatus than to create the technical computation source program b1 and the like by using the high-level language only, for example, in the case where processings for desired coordinate transformation and processings for graphic forms and the like are prepared in advance as the library objects c, d, ^{. . .} of the automatic programming apparatus, the library objects c, d, ^{. . .} corresponding to the user call codes can be invoked and executed in the stage of execution of the object b1' and the like created on the basis of the source program b1 and the like, by setting the user call codes for assigning the program numbers of the library objects c, d, **. . .** in the technical computation source program b1 and the like.

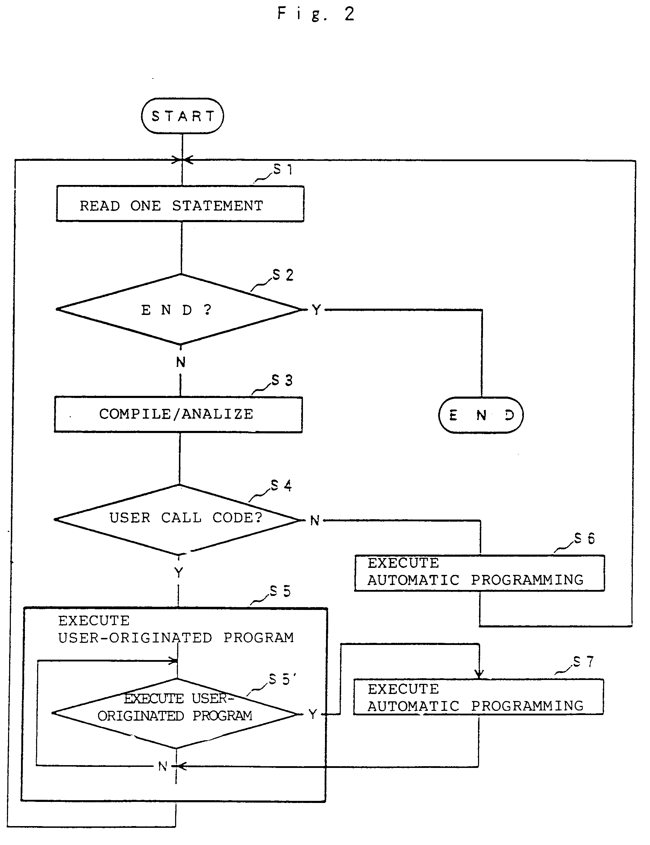

Referring now to the flow chart of Fig. 2, a conversion processing the CPU 1 executes in creating NC data on the basis of the source programs created with use of the automatic programming language will be described.

After starting the NC data conversion processing, the CPU 1 first reads, in Step S1 in the aforesaid manner, a statement for one block from the source programs created in the automatic programming language. The CPU 1 determines whether or not the statement read in Step S2 is indicative of a program end. If this statement is not indicative of the program end, the CPU 1 proceeds to Step S3, whereupon it compiles the statement. In Step S4, the CPU 1 determines whether or not the user call codes for executing the objects from the source programs in the high-level language are set in the compiled statement. If the user call codes are not set, then processing based on this statement is associated with the automatic programming language. Accordingly, the CPU 1 proceeds to Step S6, whereupon it activates automatic programming functions corresponding to this statement to perform processing, and creates the NC data. Thereafter, the CPU 1 returns to Step S1, whereupon it reads a statement for the next block.

If the result of decision in Step S4 is YES, that is, if it is concluded that the user call codes are set in the one-block statement read this time, the CPU 1 proceeds to Step S5, whereupon it activates objects of program numbers assigned by these user call codes, and starts processing for arithmetic operations too complicated for the function of the automatic programming language, processing for computing the data which are allowed to be inputted according to the grammar of the automatic programming language, etc.

When user call codes for assigning the execution of the automatic programming functions are detected in Step S5' while the objects compiled from the source programs in the high-level language are being executed step by step, the CPU 1 suspends the execution of the objects from the source programs of the high-level language, and proceeds to Step S7. Thereupon, the CPU 1 activates the automatic programming functions assigned by the user call codes, and executes predetermined processing, such as coordinate transformation, graphic processing, etc. Thereafter, the CPU 1 starts again the execution of the objects from the source programs of the high-level language.

In Step S5, the CPU 1 executes the objects from the source programs of the high-level language step by step, and in like manner thereafter. Every time the user call codes for assigning the execution of the automatic programming functions are detected, moreover, the CPU 1 executes processing for the automatic programming functions corresponding to these user call codes. When all the processing operations in Step S5 for the objects from the source programs in the high-level language are finished, the CPU 1 returns again to Step S1, whereupon it reads a statement for the next block from the source programs in the automatic programming language. Thereafter, until a code for the program end is detected from these source programs, the CPU 1 repeatedly executes the same processing as aforesaid.

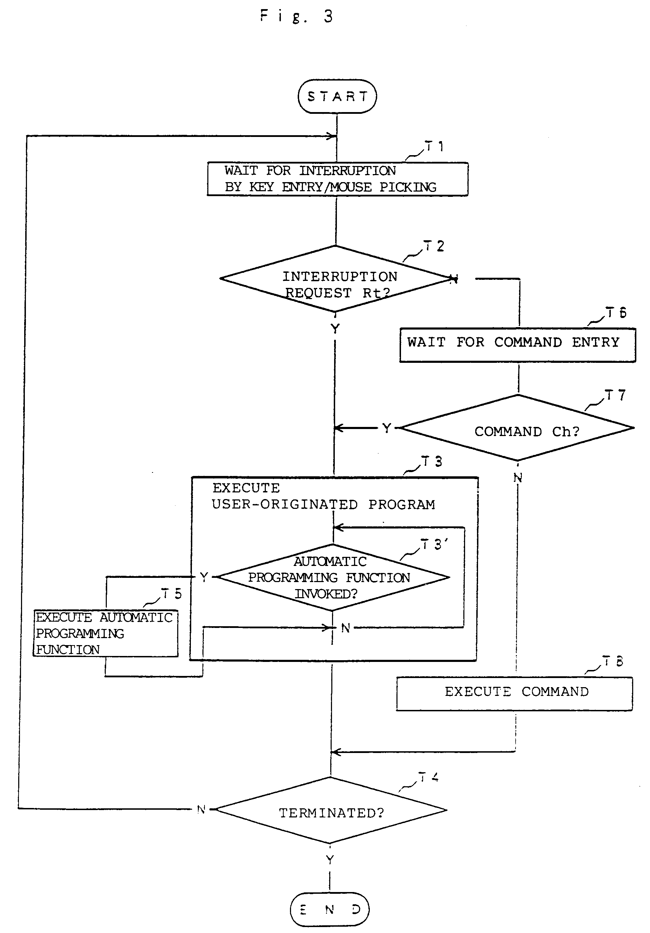

Referring now to the flow chart of Fig. 3, an interruption processing for independently activating the objects from the source programs in the general-purpose high-level language, such as the C-language, will be described.

By operating second-function keys of the keyboard 3 or by moving the tablet cursor 9c to assign the position of the graphic cursor, the operator can freely select and activate the programs previously created in the high-level language. When selecting the programs through the position assigning operation for the graphic cursor, all the program numbers for the programs created with use of the high-level language are tabulated on the display screen of the CRT 4. In this case, the corresponding programs can be started by choosing the program numbers through the position assigning operation.

After starting the interruption processing, the CPU 1 first enters a standby state in Step T1 in which the operation of the second-function keys or the position assigning operation by means of the tablet cursor 9c is awaited. In this case, an interruption request based on the operation of the second-function keys or the position assigning operation by means of the tablet cursor 9c is already detected, so that the CPU 1 determines in Step T2 whether the interruption request is a request Rf based on the operation of the second-function keys or a request Rt based on the position assigning operation by means of the tablet cursor 9c.

If the interruption request is the request Rt based on the position assigning operation by means of the tablet cursor 9c. then the value of the program number for specifying the program to be activated is already definitely selected. In Step T3, therefore, the CPU 1 invokes and activates the object of the program number selected through the position assigning operation, and starts processing the objects from the source programs in the high-level language.

When user call codes for assigning the execution of the automatic programming functions are detected in Step T3' while the objects from the source programs of the high-level language are being executed step by step, the CPU 1 suspends the execution of the objects from the source programs of the high-level language, and proceeds to Step T5. Thereupon, the CPU 1 activates the automatic programming functions assigned by the user call codes, and executes predetermined processing. Thereafter, the CPU 1 restarts the execution of the objects from the source programs of the high-level language.

In Step T3, the CPU 1 executes the objects from the source programs of the high-level language step by step in like manner. Every time the user call codes for assigning the execution of the automatic programming functions are detected, the CPU 1 executes processing for the automatic programming functions corresponding to these user call codes.

If the result of determination in Step T2 is NO, that is, if it is concluded that the interruption request is the one based on the operation of the second-function keys, the CPU 1 proceeds to Step T6, whereupon it waits for the entry of a command through key operation following the operation of the second-function keys. After the entry operation is completed, the CPU 1 determines in Step T7 whether or not the input command is a command Ch for an interrupt operation for independently activating the objects compiled from the source programs in the high-level language. If the command is intended for the interrupt operation for independently activating the objects, the objects from the source programs of the high-level language are processed in the same manner as aforesaid in accordance with the program number assigned through the key operation (Steps T3 and T5). If the command is intended for interruption for any other processing operation, the CPU 1 executes a necessary interruption processing corresponding to the input command in Step T8.

After finishing the processing of Step T3 or T8, the CPU 1 determines in Step T4 whether or not a termination key of the keyboard 3 is operated. If the termination key is not operated, the CPU 1 returns again to Step T1, whereupon it waits for the position assigning operation for the assignment of the object to be activated or some other interrupt operation or the operation of the second-function keys. If the operation of the termination key is detected, this interruption processing is terminated, and the program returns to a normal routine.

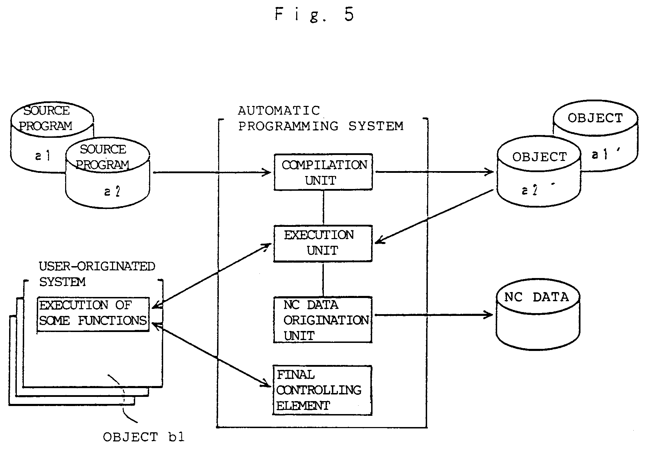

Fig. 5 is a conceptual diagram showing correlations between processings executed according to the control programs for the automatic programming apparatus corresponding to the aforementioned NC data conversion processing and interruption processing. The control programs for the automatic programming apparatus, that is, the control software of the CPU 1, comprises a compilation unit as a compiler loaded with compilation programs, an execution unit loaded with control programs for executing the object programs, and an NC data origination unit loaded with control programs required for executing the processing of parts associated with the origination of NC data stored in the object programs. A final controlling element shown in Fig. 5 is hardware which is composed of the keyboard 3 and the tablet unit 9.

The source programs a1, a2, ^{. . .} based on the automatic programming language are compiled block by block by means of the automatic programming language compiler in the compilation unit, and are loaded, as the objects a1', a2', ^{. . .} from the automatic programming language, into the RAM 2 and/or the floppy disk 11. Also, the source program b1 and the like based on the general-purpose high-level language are compiled block by block by means of the high-level language compiler in the compilation unit, and are loaded, as the objects b1' and the like for user-attribute technical computations and the like, into the RAM 2 and/or the floppy disk 11. Although the respective language levels of the compiled objects, including the library objects c, d, ^{. . .} previously reserved in the automatic programming apparatus, are all equal, as shown in Fig. 4, the objects from the source programs in the high-level language are declared as user-originated systems in Fig. 5, in order to distinguish between the normal objects a1', a2', ^{. . .} compiled from the automatic programming language and the object b1' and the like from the source programs in the high-level language for attaining a user's proper purpose.

When the statements of the source programs a1, a2, ^{. . .}, whose principal parts are created in the automatic programming language, are read and executed block by block in the aforementioned NC data conversion processing (Steps S1 to S3), the execution unit analyzes one block of the objects a1', a2', ^{. . .} corresponding to these statements. If the block is a processing associated with the origination of NC data, the NC data for one block are created and stored in the RAM 2 in accordance with the control programs of the NC data origination unit (Step S6). When the user call codes for executing the objects from the source programs in the high-level language are detected while the statements of the source programs a1, a2, ^{. . .}, whose principal parts are created by the automatic programming language, are being executed block by block (Step S4), the object b1' and the like corresponding to the user call codes, that is, the user-originated systems set by user in order to attain his proper purpose, are read by the execution unit, and processing for the object b1' and the like corresponding to the user call codes is executed until the object b1' and the like are terminated (Step S5). When the user call codes for assigning the execution of the automatic programming functions written in the object b1' and the like are detected while the processing for these objects is being executed (Step S5'), the execution unit suspends the processing for the object b1' and the like, and restarts the processing for the object b1' and the like (step S5) after executing the automatic programming functions assigned by the user call codes, e.g., the library objects c, d, ^{. . .} shown in Fig. 4 (Step S7).

When interruption signals for independently activating the object b1' and the like, from the source programs in the high-level language, are inputted through the keyboard 3 or the tablet unit 9, which constitutes the controlling element (Steps T1, T2, T6 and T7), the object b1' and the like of the high-level language, selected by the key entry through the keyboard 3 or the position assigning operation by the tablet cursor 9c, are read by the execution unit, and processing of the user-originated systems stored in the object b1' and the like is started at once (Step T3). When the user call codes for assigning the execution of the automatic programming functions written in the object b1' and the like are detected while the processing for these objects is being executed (Step T3'), the execution unit suspends the processing for the object b1' and the like, and restarts the processing for the object b1' and the like (Step T3) after executing the automatic programming functions assigned by the user call codes (Step T5), in the same manner as aforesaid. If the user call codes for assigning the execution of the automatic programming functions are not written in these objects, only the processing associated with the programs in the high-level language, that is, the processing of Step T3, is executed. Thus, if programs are created without writing the user call codes, for assigning the execution of the automatic programming functions, in the source programs of the user-originated systems, the automatic programming apparatus itself can also be used as a personal computer.

According to a function expanding method for an automatic programming apparatus of the present invention, delicate technical computations and the like, which cannot be programmed with use of the automatic programming language only, can be programmed with use of the general-purpose high-level language. By invoking the programs in the general-purpose high-level language from the programs in the automatic programming language for execution, or by invoking the programs in the automatic programming language from the programs in the general-purpose high-level language for execution, the results of computation, can be directly utilized as data for automatic programming, and the programs for the technical computations, obtained through the program written in general-purpose high-level language, and the like can be easily be created with use of the functions previously reserved in the automatic programming apparatus.

## Claims

1. A function expanding method for an automatic programming apparatus, comprising the steps of:
providing the automatic programming apparatus with a compiler for compiling a general-purpose high-level language;
creating a program in the high-level language and compiling and storing the created program by means of said compiler for compiling the high-level language; and
invoking said stored program of the high-level language and processing said program during the execution of a program of an automatic programming language.

2. A function expanding method for an automatic programming apparatus according to claim 1, wherein said automatic programming apparatus is caused to read the program of the high-level language with an identification code attached thereto; a call code for invoking the identification code attached to said program of the high-level language is set beforehand in the program of the automatic programming language, and the program of the high-level language corresponding to said call code is invoked and executed when the call code is read during the execution of the program of the automatic programming language.

3. A function expanding method for an automatic programming apparatus according to claim 1, wherein said program of the high-level language is invoked and executed in response to an interruption request from a final controlling element.

4. A function expanding method for an automatic programming apparatus according to claim 1, further comprising a step of invoking an automatic programming function of the automatic programming apparatus and processing said function during the execution of the program in the high-level language.

5. A function expanding method for an automatic programming apparatus, comprising the steps of:
providing the automatic programming apparatus with a compiler for compiling a general-purpose high-level language;
creating a program of the high-level language and compiling and storing the created program by said compiler of the high-level language; and
invoking an automatic programming function of the automatic programming apparatus and processing said function during the execution of the program of the high-level language.

6. A function expanding method for an automatic programming apparatus according to claim 5, wherein said automatic programming apparatus is caused to read the program of the automatic programming language with an identification code attached thereto; a call code for invoking the identification code attached to said program of the automatic programming language is set beforehand in the program of the high-level language, and the program of the automatic programming language corresponding to said call code is invoked and executed when the call code is read during the execution of the program of the high-level language.

7. A function expanding method for an automatic programming apparatus according to claim 5; wherein said program of the automatic programming language is invoked and executed in response to an interruption request from a final controlling element.
